(19) Europäisches Patentamt
European Patent Office
Office européen des brevets

(11) **EP 4 371 801 A1**

(12) **EUROPÄISCHE PATENTANMELDUNG**

(43) Veröffentlichungstag:
**22.05.2024  Patentblatt 2024/21**

(21) Anmeldenummer: 23209481.3

(22) Anmeldetag: **13.11.2023**

(51) Internationale Patentklassifikation (IPC):
**B60L 9/24** (2006.01)     **B60L 58/20** (2019.01)
**B60L 58/22** (2019.01)     **B61C 3/02** (2006.01)
**B61C 9/38** (2006.01)     **H02J 1/10** (2006.01)
**H02M 5/42** (2006.01)

(52) Gemeinsame Patentklassifikation (CPC):
**B60L 58/20; B60L 9/24; B60L 58/22; B61C 3/02; B61C 9/38; H02J 1/10; H02M 1/007;** B60L 2200/26; B60L 2210/10; B60L 2240/529; B60L 2240/547; B60L 2240/549; H02M 1/008; H02M 1/10; H02M 5/4585

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **21.11.2022  DE 102022212402**

(71) Anmelder: **Siemens Mobility GmbH**
**81739 München (DE)**

(72) Erfinder: **Hassler, Stefan**
**91281 Kirchenthumbach, OT Neuzirkendorf (DE)**

(74) Vertreter: **Siemens Patent Attorneys**
**Postfach 22 16 34**
**80506 München (DE)**

(54) **ELEKTRISCHES FAHRZEUG UND VERFAHREN ZU DESSEN BETRIEB**

(57)  Die Erfindung bezieht sich unter anderem auf ein Verfahren zum Betreiben eines elektrischen Fahrzeugs (10), das einen netzseitigen Umrichter (13) zum Anschluss an ein streckenseitiges Energieversorgungsnetz (20), einen an den netzseitigen Umrichter (13) angeschlossenen Gleichspannungszwischenkreis (14), einen an den Gleichspannungszwischenkreis (14) angeschlossenen antriebsseitigen Umrichter (15) und eine mittels eines batterieseitigen Umrichters (70) mittelbar an den Gleichspannungszwischenkreis (14) angeschlossene erste Batterie (50) umfasst. Erfindungsgemäß ist vorgesehen, dass in Abhängigkeit vom Ladezustand (SoC) einer zweiten Batterie (60), die an den Gleichspannungszwischenkreis (14) umrichterfrei angeschlossen ist, eine Batteriestromvorgabe (Iv1) ermittelt und unter Heranziehung dieser Batteriestromvorgabe (Iv1) zumindest einer der genannten Umrichter (13, 70) angesteuert wird, wobei der Betrag der Batteriestromvorgabe (Iv1) größer als Null gewählt wird, wenn der Ladezustand (SoC) einen oberen Schwellenwert (SW1) überschreitet oder einen unteren Schwellenwert (SW2) unterschreitet, und wobei der Betrag der Batteriestromvorgabe (Iv1) überproportional umso größer gewählt wird, je mehr der Ladezustand (SoC) den oberen Schwellenwert (SW1) überschreitet oder den unteren Schwellenwert (SW2) unterschreitet.

FIG 2

EP 4 371 801 A1

# EP 4 371 801 A1

**Beschreibung**

Die Erfindung bezieht sich auf elektrische Fahrzeuge und Verfahren zu deren Betrieb.

Im Bereich der Schienenfahrzeugtechnik sind Eisenbahnzüge bekannt, die über Stromabnehmer an ein streckenseitiges Energieversorgungsnetz anschließbar sind. Die Stromabnehmer stehen über netzseitige Umrichter mit dem Gleichspannungszwischenkreis und über diesen und antriebsseitige Umrichter mit dem Fahrzeugantrieb in Verbindung. Der Gleichspannungszwischenkreis bildet somit eine elektrische Zwischenkomponente zwischen der Netzseite bzw. dem streckenseitigen Energieversorgungsnetz einerseits und der Antriebsseite bzw. den antriebsseitigen Umrichtern und dem Antrieb andererseits.

Darüber hinaus ist es bekannt, an den Gleichspannungszwischenkreis Batterien anzuschließen, die beispielsweise dazu dienen können, einen Zugbetrieb in nichtelektrifizierten Streckenabschnitten zu ermöglichen. Die Batterien sind bei heutzutage im Einsatz befindlichen Eisenbahnzügen jeweils über Gleichspannungssteller an den Gleichspannungszwischenkreis angeschlossen. Die Funktion der Gleichspannungssteller besteht darin, den Energiefluss zwischen dem Gleichspannungszwischenkreis und der jeweils zugehörigen Batterie zu regeln und einen batteriekonformen Batteriebetrieb, also einen gemäß den jeweils optimalen Betriebsparametern der jeweiligen Batterie, zu gewährleisten.

Um einen autarken Fahrbetrieb auch in längeren Streckenabschnitten zu ermöglichen, werden Batterien mit besonders großer Kapazität eingesetzt, die auch als Hochenergiebatterien bezeichnet werden können. Solche Hochenergiebatterien zeichnen sich durch eine hohe Speicherfähigkeit aus, jedoch sollten hohe Leistungsspitzen oder hohe Leistungsänderungen wegen der Gefahr vorzeitiger Alterung vermieden werden.

Der Erfindung liegt die Aufgabe zugrunde, ein verbessertes Verfahren zum Betrieb eines elektrischen Fahrzeugs anzugeben, das einen netzseitigen Umrichter zum Anschluss an ein streckenseitiges Energieversorgungsnetz, einen an den netzseitigen Umrichter angeschlossenen Gleichspannungszwischenkreis, einen an den Gleichspannungszwischenkreis angeschlossenen antriebsseitigen Umrichter und eine mittels eines batterieseitigen Umrichters mittelbar an den Gleichspannungszwischenkreis angeschlossene erste Batterie umfasst.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass in Abhängigkeit vom Ladezustand einer zweiten Batterie, die an den Gleichspannungszwischenkreis umrichterfrei angeschlossen ist, eine Batteriestromvorgabe ermittelt und unter Heranziehung dieser Batteriestromvorgabe zumindest einer der genannten Umrichter angesteuert wird, wobei der Betrag der Batteriestromvorgabe größer als Null gewählt wird, wenn der Ladezustand einen oberen Schwellenwert überschreitet oder einen unteren Schwellenwert unterschreitet, und wobei der Betrag der Batteriestromvorgabe überproportional umso größer gewählt wird, je mehr der Ladezustand den oberen Schwellenwert überschreitet oder den unteren Schwellenwert unterschreitet.

Ein wesentlicher Vorteil des erfindungsgemäßen Verfahrens basiert zunächst einmal auf dem Konzept, zumindest zwei Batterien in unterschiedlicher Verschaltung an den Gleichspannungszwischenkreis anzuschließen. Bei der ersten Batterie, die über einen Umrichter an den Gleichspannungszwischenkreis angeschlossen ist, kann in vorteilhafter Weise eine Optimierung des Batteriedesigns primär mit Blick auf die Eigenschaft als Hochenergiebatterie erfolgen, also mit Blick auf eine besonders hohe Energiespeicherfähigkeit bei hoher Lebensdauer. Bei der umrichterfrei angeschlossenen zweiten Batterie kann eine Optimierung des Batteriedesigns mit einem anderen Ziel erfolgen. Beispielweise kann diese zweite Batterie als Hochleistungsbatterie ausgestaltet werden, die gezielt hohe Ströme liefern oder aufnehmen kann und mit hohen Stromänderungen und Leistungsspitzen zurechtkommt. Das Maß der Energiespeicherfähigkeit kann bei der zweiten Batterie eine untergeordnete Rolle spielen.

Durch den parallelen Einsatz mindestens zweier Batterien in unterschiedlicher Verschaltung, nämlich mit und ohne Zwischenschaltung eines Umrichters, wird in vorteilhafter Weise eine Arbeitsteilung ermöglicht: Die stellerfreie zweite Batterie kann für die dynamischen Prozesse dienen, also für die Abgabe hoher Batterieströme mit großen Leistungsspitzen beim Beschleunigen und die Aufnahme hoher Batterieströme mit großen Leistungsspitzen beim Bremsen. Die mittels Umrichter angeschlossene erste Batterie kann für den vergleichsweise statischen Betrieb herangezogen werden und die Gleichspannungszwischenkreisspannung durch Nachladen oder Entladen der zweiten Batterie im zeitlichen Mittel konstant halten.

Um nun einen optimalen Betrieb der zweiten Batterie zu erreichen, ist erfindungsgemäß vorgesehen, zumindest einen der genannten Umrichter in Abhängigkeit von dem Ladezustand der stellerfreien zweiten Batterie anzusteuern, indem eine Batteriestromvorgabe erzeugt wird, die mit Bezug auf den Ladezustand nichtlinear ist und betragsmäßig überproportional ansteigt, wenn ein oberer oder unterer Schwellenwert über- oder unterschritten wird. Durch diese betragsmäßig überproportionale Korrektur wird in vorteilhafter Weise den hohen Anforderungen Rechnung getragen, die eine Parallelschaltung bzw. ein stellerfreier Anschluss der zweiten Batterie mit sich bringt, weil nämlich die überproportionale Korrektur ein besonders schnelles Zurückführen des Ladezustands in seinen Sollbereich ermöglicht.

Vorteilhaft ist es, wenn im Falle, dass der Ladezustand den oberen Schwellenwert überschreitet, die betragsmäßige Ermittlung der Batteriestromvorgabe das Anwenden einer ganzrationalen Funktion n-ten Grades auf die Differenz zwischen dem Ladezustand und dem oberen Schwellenwert unter Bildung eines oberen Funktionswerts einschließt.

Im Falle, dass der Ladezustand den oberen Schwellenwert überschreitet, schließt die betragsmäßige Ermittlung der Batteriestromvorgabe vorzugsweise das Einspeisen des oberen Funktionswerts in einen oberen PI-Regler ein und die Reglerausgabe des oberen PI-Reglers definiert vorzugsweise den Betrag der Batteriestromvorgabe.

Im Falle, dass der Ladezustand den unteren Schwellenwert unterschreitet, schließt die betragsmäßige Ermittlung der Batteriestromvorgabe vorzugsweise das Anwenden einer ganzrationalen Funktion n-ten Grades auf die Differenz zwischen dem unteren Schwellenwert und dem Ladezustand unter Bildung eines unteren Funktionswerts ein.

Im Falle, dass der Ladezustand den unteren Schwellenwert unterschreitet, schließt die betragsmäßige Ermittlung der Batteriestromvorgabe vorzugsweise das Einspeisen des unteren Funktionswerts in einen unteren PI-Regler ein und die Reglerausgabe des unteren PI-Reglers definiert vorzugsweise den Betrag der Batteriestromvorgabe.

Die ganzrationalen Funktionen n-ten Grades sind vorzugsweise quadratische Funktionen.

Im Falle eines Batteriebetriebs des Fahrzeugs und eines inaktiven netzseitigen Umrichters wird der batterieseitige Umrichter, der der ersten Batterie zugeordnet ist, vorzugsweise derart angesteuert, dass die erste Batterie einen Batteriestrom in den Gleichspannungszwischenkreis einspeist, der von der Batteriestromvorgabe abhängt oder dieser entspricht.

Im Falle eines Netzbetriebs des Fahrzeugs wird vorzugsweise der netzseitige Umrichter derart angesteuert, dass er einen Zwischenkreisstrom in den Gleichspannungszwischenkreis einspeist, der einer mit der Batteriestromvorgabe gebildeten Sollstromvorgabe entspricht.

Die Sollstromvorgabe wird vorzugsweise unter Heranziehung der Batteriestromvorgabe und zumindest einer ersten und zweiten weiteren Vorgabe ermittelt, wobei die erste weitere Vorgabe auf die erste Batterie bezogen ist und den Strom angibt, den der netzseitige Umrichter der ersten Batterie zur Aufrechterhaltung eines Sollladezustands zur Verfügung stellen soll, und wobei die zweite weitere Vorgabe auf den antriebsseitigen Umrichter bezogen ist und den Strom angibt, den der netzseitige Umrichter dem antriebsseitigen Umrichter zum Betrieb des Antriebs zur Verfügung stellen soll.

Die Sollstromvorgabe wird im Netzbetrieb vorzugsweise durch vorzeichenrichtige Addition der Batteriestromvorgabe und der ersten und zweiten weiteren Vorgabe ermittelt.

Neben der genannten umrichterbehaftet angeschlossenen ersten Batterie und der umrichterfrei angeschlossenen zweiten Batterie können selbstverständlich weitere Batterien an den Gleichspannungszwischenkreis angeschlossen werden, sei es umrichterbehaftet oder umrichterfrei. Die Ausführungen zu der ersten und zweiten Batterie gelten dann je nach Anschluss an den Gleichspannungszwischenkreis entsprechend.

Die Erfindung bezieht sich darüber hinaus auf ein elektrisches Fahrzeug, das einen netzseitigen Umrichter zum Anschluss an ein streckenseitiges Energieversorgungsnetz, einen an den netzseitigen Umrichter angeschlossenen Gleichspannungszwischenkreis, einen an den Gleichspannungszwischenkreis angeschlossenen antriebsseitigen Umrichter und eine mittels eines batterieseitigen Umrichters mittelbar an den Gleichspannungszwischenkreis angeschlossene erste Batterie umfasst.

Erfindungsgemäß ist bezüglich eines solchen Fahrzeugs vorgesehen, dass an den Gleichspannungszwischenkreis eine zweite Batterie umrichterfrei angeschlossen ist und eine Steuereinrichtung vorhanden ist, die in Abhängigkeit vom Ladezustand der zweiten Batterie eine Batteriestromvorgabe ermittelt und unter Heranziehung dieser Batteriestromvorgabe zumindest einen der genannten Umrichter ansteuert, wobei sie den Betrag der Batteriestromvorgabe größer als Null wählt, wenn der Ladezustand einen oberen Schwellenwert überschreitet oder einen unteren Schwellenwert unterschreitet, und wobei sie den Betrag der Batteriestromvorgabe überproportional umso größer wählt, je mehr der Ladezustand den oberen Schwellenwert überschreitet oder den unteren Schwellenwert unterschreitet.

Bezüglich der Vorteile des erfindungsgemäßen Fahrzeugs und dessen vorteilhafter Ausgestaltungen sei auf die obigen Ausführungen im Zusammenhang mit dem erfindungsgemäßen Verfahren und dessen vorteilhafter Ausgestaltungen verwiesen.

Vorteilhaft ist es, wenn die Steuereinrichtung einen oberen Funktionsblock umfasst, der im Falle, dass der Ladezustand den oberen Schwellenwert überschreitet, auf die Differenz zwischen dem Ladezustand und dem oberen Schwellenwert eine ganzrationale Funktion n-ten Grades unter Bildung eines oberen Funktionswerts anwendet.

Dem oberen Funktionsblock ist vorzugsweise ein oberer PI-Regler nachgeordnet, in den der obere Funktionswert eingespeist wird und dessen Reglerausgabe den Betrag der Batteriestromvorgabe definiert, wenn der Ladezustand den oberen Schwellenwert überschreitet.

Alternativ oder zusätzlich umfasst die Steuereinrichtung vorzugsweise einen unteren Funktionsblock, der im Falle, dass der Ladezustand den unteren Schwellenwert unterschreitet, auf die Differenz zwischen dem unteren Schwellenwert und dem Ladezustand eine ganzrationale Funktion n-ten Grades unter Bildung eines unteren Funktionswerts anwendet.

Dem unteren Funktionsblock ist vorzugsweise ein unterer PI-Regler nachgeordnet, in den der untere Funktionswert eingespeist wird und dessen Reglerausgabe den Betrag der Batteriestromvorgabe definiert, wenn der Ladezustand den unteren Schwellenwert unterschreitet.

Die ganzrationalen Funktionen n-ten Grades sind bevorzugt quadratische Funktionen.

Die Erfindung wird nachfolgend anhand von Ausführungsbeispielen näher erläutert. Dabei zeigen beispielhaft

Figur 1    Bestandteile eines ersten Ausführungsbeispiels für ein erfindungsgemäßes Fahrzeug in einer schematischen Seitenansicht,

Figur 2    Bestandteile eines Ausführungsbeispiels für eine Steuereinrichtung des Fahrzeugs gemäß Figur 1,

Figur 3    Funktionen n-ten Grades zur Bildung oberer und unterer Funktionswerte, und

Figur 4    den Betrieb eines Batteriebetriebsmoduls der Steuereinrichtung während eines Batteriebetriebs des Fahrzeugs gemäß Figur 1.

In den Figuren werden der Übersicht halber für identische oder vergleichbare Komponenten dieselben Bezugszeichen verwendet.

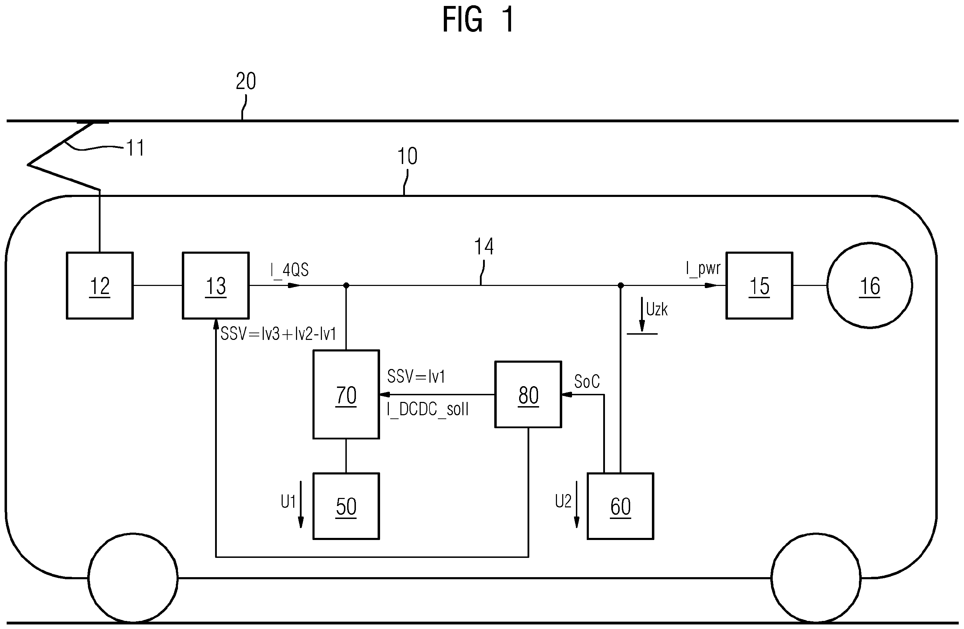

Die Figur 1 zeigt Bestandteile eines Ausführungsbeispiels für ein erfindungsgemäßes elektrisches Fahrzeug 10 näher im Detail. Das Fahrzeug 10 ist mit einem Stromabnehmer 11 ausgestattet, der in ausgefahrener bzw. aktiver Stellung einen Anschluss an ein streckenseitiges Energieversorgungsnetz 20 ermöglicht. Bei dem Fahrzeug kann es sich beispielsweise um ein Schienenfahrzeug handeln.

Der Stromabnehmer 11 ist über einen Transformator 12 an einen netzseitigen Umrichter vorzugsweise in Form eines Vierqua drantenstellers 13 angeschlossen, der den Stromabnehmer 11 mit einem Gleichspannungszwischenkreis 14 verbindet.

Auf der in der Figur 1 rechten Seite ist an den Gleichspannungszwischenkreis 14 ein antriebsseitiger Umrichter vorzugsweise in Form eines Pulswechselrichters 15 angeschlossen. Der antriebsseitige Pulswechselrichter 15 schließt einen fahrzeugseitigen elektrischen Antrieb 16 an den Gleichspannungszwischenkreis 14 an.

An den Gleichspannungszwischenkreis 14 sind außerdem eine erste Batterie mit hoher Energiespeichermöglichkeit, nachfolgend Hochenergiebatterie 50 genannt, und eine zweite Batterie mit hoher Ausgangs- und Ladeleistung, nachfolgend Hochleistungsbatterie 60 genannt, angeschlossen.

Die Hochenergiebatterie 50 ist mittelbar über einen batterieseitigen Umrichter in Form eines Gleichspannungsstellers 70 (DC/DC-Steller) an den Gleichspannungszwischenkreis 14 angeschlossen.

Die Hochleistungsbatterie 60 ist im Unterschied zur Hochenergiebatterie 50 mit ihren Batterieanschlüssen unmittelbar an den Gleichspannungszwischenkreis 14 angeschlossen, also ohne Gleichspannungssteller 70 bzw. stellerfrei. Die Hochleistungsbatterie 60 und der Gleichspannungszwischenkreis 14 sind also elektrisch parallelgeschaltet, sodass die Klemmenspannung U2 der Hochleistungsbatterie 60 stets der Zwischenkreisspannung Uzk des Gleichspannungszwischenkreises 14 entspricht.

Der Vierquadrantensteller 13 kann wegen des Anschlusses der Hochleistungsbatterie 60 somit während eines Netzbetriebs des Fahrzeugs 10 nicht die Zwischenkreisspannung Uzk des Gleichspannungszwischenkreises 14 regeln, wie dies sonst üblich wäre, sondern nur das Einspeisen von Strom I_4QS in Richtung des Gleichspannungszwischenkreises 14 oder die Entnahme von Strom aus dem Gleichspannungszwischenkreis 14.

Die Hochenergiebatterie 50 und die Hochleistungsbatterie 60 führen eine Art Arbeitsteilung durch: Die Hochleistungsbatterie 60 reagiert aufgrund der Parallelschaltung automatisch und ohne weitere äußere Ansteuerung auf die dynamischen Prozesse und kompensiert durch die Abgabe hoher Batterieströme hohe Leistungsspitzen beim Beschleunigen des Fahrzeugs 10 und durch die Aufnahme hoher Batterieströme hohe Leistungsspitzen beim Bremsen des Fahrzeugs 10.

Die Hochenergiebatterie 50 dient - im Batteriebetrieb des Fahrzeugs 10 - zum Nachladen oder Entladen der Hochleistungsbatterie 60, damit deren Spannung und die Zwischenkreisspannung Uzk des Gleichspannungszwischenkreises 14 im zeitlichen Mittel konstant gehalten werden.

Das Fahrzeug 10 ist darüber hinaus mit einer Steuereinrichtung 80 ausgestattet, die eine umrichterbezogene Sollstromvorgabe SSV bildet und mit dieser während eines Netzbetriebs des Fahrzeugs 10 den Vierquadrantensteller 14 und während eines Batteriebetriebs des Fahrzeugs 10 den DC/DC-Steller 70 ansteuert.

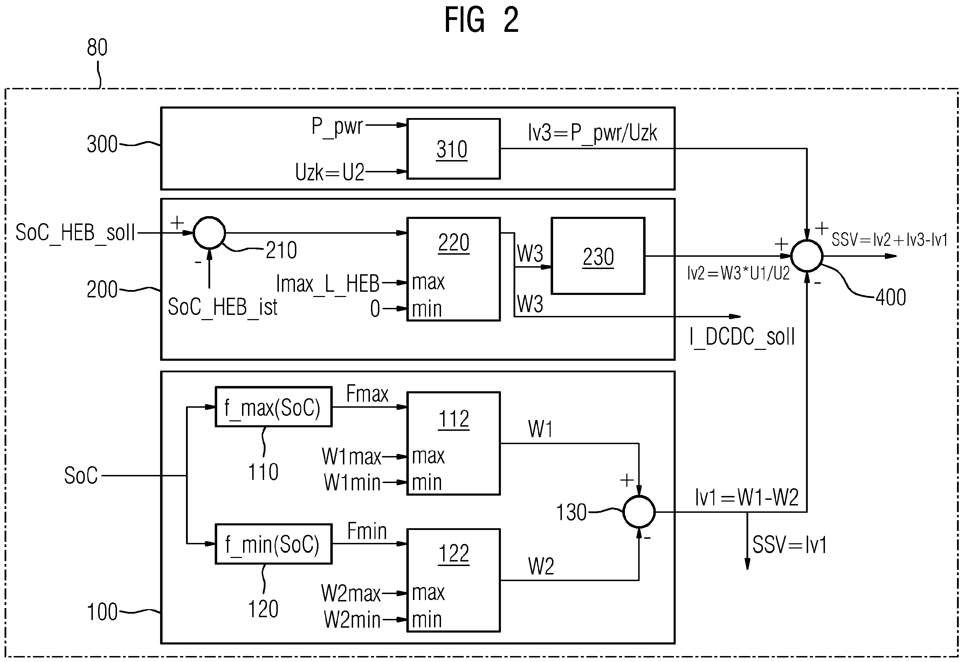

Die Figur 2 zeigt beispielhaft eine bevorzugte Ausgestaltung der Steuereinrichtung 80 näher im Detail. Die Steuereinrichtung 80 gemäß Figur 2 umfasst ein Batteriebetriebsmodul 100, ein Stellerbetriebsmodul 200 und ein Wechselrichterbetriebsmodul 300.

Das Batteriebetriebsmodul 100 weist einen oberen Funktionsblock 110 auf, der im Falle, dass der Ladezustand SoC der Hochleistungsbatterie 60 einen oberen Schwellenwert SW1 überschreitet, auf die Differenz zwischen dem Ladezustand SoC und dem oberen Schwellenwert SW1 eine ganzrationale Funktion f_max n-ten Grades unter Bildung eines oberen Funktionswerts Fmax anwendet, vorzugsweise gemäß

$$Fmax = \begin{cases} (SoC - SW1)^2 & f\ddot{u}r \; SW1 < SoC \leq 1 \\ 0 & f\ddot{u}r \; 0 \leq SoC \leq SW1 \end{cases}$$

Dem oberen Funktionsblock 110 ist ein oberer PI-Regler 112 nachgeordnet, in den der obere Funktionswert Fmax eingespeist wird und dessen Reglerausgabe W1 den Betrag einer Batteriestromvorgabe Iv1 definiert, wenn der Ladezustand den oberen Schwellenwert SW1 überschreitet, also Fmax größer als Null ist.

Das Batteriebetriebsmodul 100 umfasst außerdem einen unteren Funktionsblock 120, der im Falle, dass der Ladezustand der Hochleistungsbatterie 60 einen unteren Schwellenwert SW2 unterschreitet, auf die Differenz zwischen dem unteren Schwellenwert SW2 und dem Ladezustand SOC eine ganzrationale Funktion f_min n-ten Grades unter Bildung eines unteren Funktionswerts Fmin anwendet, vorzugsweise gemäß

$$Fmin = \begin{cases} (SoC - SW2)^2 & f\ddot{u}r \; 0 < SoC \leq SW2 \\ 0 & f\ddot{u}r \; SW2 < SoC \leq 1 \end{cases}$$

Dem unteren Funktionsblock 120 ist ein unterer PI-Regler 122 nachgeordnet, in den der untere Funktionswert Fmin eingespeist wird und dessen Reglerausgabe W2 den Betrag der Batteriestromvorgabe Iv1 definiert, wenn der Ladezustand den unteren Schwellenwert SW2 unterschreitet und demgemäß Fmin größer als Null ist und Fmax demgemäß Null beträgt.

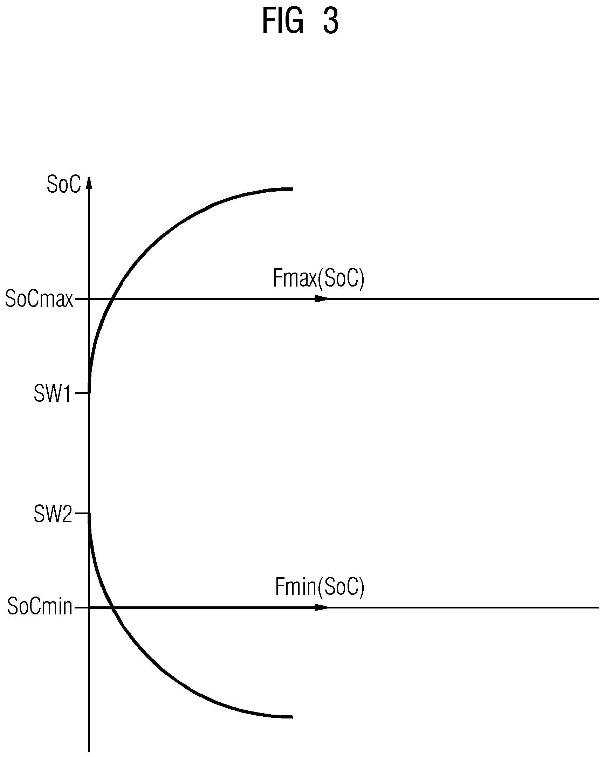

Die Verläufe der ganzrationalen Funktion f_max und f_min sind beispielhaft in der Figur 3 dargestellt. Dabei bezeichnet SoCmax den maximal zulässigen Ladezustand der Hochleistungsbatterie 60 und SoCmin den minimal zulässigen Ladezustand der Hochleistungsbatterie 60.

Die Batteriestromvorgabe Iv1 wird vorzugsweise mittels eines Differenzbildners 130 gebildet, vorzugsweise gemäß

$$Iv1 = W1 - W2$$

In dieser Weise wird eine Batteriestromvorgabe Iv1 mit einem positiven Vorzeichen gebildet, wenn die Hochleistungsbatterie 60 zu sehr aufgeladen ist und mittels eines Entladestroms entladen werden soll, und mit einem negativen Vorzeichen gebildet, wenn die Hochleistungsbatterie 60 zu sehr entladen ist und mittels eines Ladestroms geladen werden soll.

Die Definition des Vorzeichens ist selbstverständlich beliebig, alternativ kann die Batteriestromvorgabe Iv1 mittels des Differenzbildners 130 gebildet werden gemäß

$$Iv1 = W2 - W1$$

Die Vorzeichenvergabe ist nachfolgend entsprechend zu berücksichtigen. Im Folgenden wird mit Blick auf die Vorzeichenvergabe beispielhaft davon ausgegangen, dass die Batteriestromvorgabe Iv1 errechnet wird gemäß:

$$Iv1 = W1 - W2$$

Der maximale Wert der Reglerausgabe W1 wird vorzugsweise begrenzt auf einen maximal zulässigen Reglerausgabewert Wimax, siehe Reglereingang "max" des PI-Reglers 112 in Figur 2.

Der maximale Wert der Reglerausgabe W2 wird vorzugsweise begrenzt auf einen maximal zulässigen Reglerausgabewert W2max, siehe Reglereingang "max" des PI-Reglers 122 in Figur 2.

Die maximal zulässigen Reglerausgabewerte Wimax und W2max sind vorzugsweise davon abhängig, ob sich das Fahrzeug 10 im Batteriebetrieb oder im Netzbetrieb befindet. Dies wird weiter unten noch näher erläutert.

Der Minimalwerte der Reglerausgabe Wimin und W2min werden vorzugsweise auf Null festgelegt, siehe Reglereingänge "min" der PI-Regler 112 und 122 in Figur 2. Dies gilt sowohl für den Batteriebetrieb als auch für den Netzbetrieb.

Das Stellerbetriebsmodul 200 umfasst bei dem Ausführungsbeispiel gemäß Figur 2 einen Differenzbildner 210, der die Differenz zwischen dem Sollladezustand SoC_HEB_soll der Hochenergiebatterie 50 und dem Istladezustand SoC_HEB_ist der Hochenergiebatterie 50 bildet und den Differenzwert in einen PI-Regler 220 des Stellerbetriebsmoduls 200 einspeist.

Der maximale Wert der Reglerausgabe W3 des PI-Reglers 220 des Stellerbetriebsmoduls 200 wird vorzugsweise begrenzt auf den maximal zulässigen Ladestrom Imax_L_HEB der Hochenergiebatterie 50, siehe Reglereingang "max" des PI-Reglers 220 in Figur 2. Der Minimalwert der Reglerausgabe W3 wird vorzugsweise auf Null festgelegt, siehe Reglereingang "min" des PI-Reglers 220 in Figur 2.

Die Reglerausgabe W3 des PI-Reglers 220 des Stellerbetriebsmoduls 200 dient - während des Netzbetriebs des Fahrzeugs 10 - zur Ansteuerung des DC/DC-Stellers 70 gemäß Figur 1 und legt während des Netzbetriebs einen Ladesollstrom I_DCDC_soll fest.

Darüber hinaus wird die Reglerausgabe W3 des PI-Reglers 220 des Stellerbetriebsmoduls 200 in einen Quotientenbildner 230 eingespeist, der durch Quotientenbildung eine Stellerstromvorgabe Iv2 bildet, vorzugsweise gemäß

$$Iv2 = W3 * U1/Uzk$$

wobei U1 die Klemmenspannung an der Hochenergiebatterie 50 und Uzk die Zwischenkreisspannung und damit die Klemmenspannung U2 an der Hochleistungsbatterie 60 bezeichnet.

Die Stellerstromvorgabe Iv2 ist aufgrund der Vorzeichendefinition durch den Differenzbildner 210 positiv, wenn die Hochenergiebatterie 50 Ladung benötigt und geladen werden soll. Die Stellerstromvorgabe Iv2 ist negativ, wenn die Hochenergiebatterie 50 Ladung abgeben will bzw. entladen werden soll.

Das Wechselrichterbetriebsmodul 300 umfasst bei dem Ausführungsbeispiel gemäß Figur 2 einen Quotientenbildner 310, der durch Quotientenbildung eine Wechselrichtervorgabe Iv3 bildet, vorzugsweise gemäß

$$Iv3 = P\_pwr / Uzk$$

wobei P_pwr die Leistung des Pulswechselrichters 15 beschreibt. Bei einem positiven Vorzeichen leitet der Pulswechselrichter 15 Antriebsleistung in Richtung des Antriebs 16. Bei einem negativen Vorzeichen speist der Pulswechselrichter 15 Bremsleistung in den Gleichspannungszwischenkreis 14 ein. Im Falle dieser Vorzeichendefinition ist die Wechselrichtervorgabe Iv3 also positiv, wenn der Pulswechselrichter 15 Strom benötigt und negativ, wenn der Pulswechselrichter 15 Strom abgeben will.

Im Falle eines Batteriebetriebs des Fahrzeugs 10 wird die Batteriestromvorgabe Iv1 unmittelbar als Sollstromvorgabe SSV der Steuereinrichtung 80 gemäß Figur 1 zur Ansteuerung an den DC/DC-Steller 70 übermittelt. Der Vierquantensteller 13, das Stellerbetriebsmodul 200 und das Wechselrichterbetriebsmodul 300 sind inaktiv bzw. deaktiviert. Es gilt hier also:

$$SSV = Iv1$$

und

$$Iv3 = Iv2 = W3 = 0$$

Im Falle eines Netzbetriebs des Fahrzeugs 10 wird die Batteriestromvorgabe Iv1 gemeinsam mit der Stellervorgabe Iv2 und der Wechselrichtervorgabe Iv3 in einem Differenzbildner 400 einer Differenzbildung bzw. einer vorzeichengerechten Addition unterworfen, wodurch die Sollstromvorgabe SSV für den Netzbetrieb gebildet wird, vorzugsweise gemäß

$$SSV = Iv2 + Iv3 - Iv1$$

Das negative Vorzeichen für die Batteriestromvorgabe Iv1 ergibt sich durch die oben beschriebene Vorzeichenwahl.

Im Netzbetrieb des Fahrzeugs 10 wird mit der Sollstromvorgabe SSV = Iv3 + Iv2 - Iv1 der Vierquadrantensteller 13 angesteuert.

Die Reglerausgabe W3 des PI-Reglers 220 des Stellerbetriebsmoduls 200 dient während des Netzbetriebs außerdem zur Ansteuerung des DC/DC-Stellers 70 und legt den Ladesollstrom I_DCDC_soll fest. Demgemäß kann die Reglerausgabe W3 auch als zweite Sollstromvorgabe der Steuereinrichtung für den DC/DC-Steller 70 bezeichnet werden.

Die Funktion und Arbeitsweise der Steuereinrichtung 80 gemäß den Figuren 1 bis 3 soll nachfolgend noch näher im Detail beschrieben werden:

Im Batteriebetrieb des Fahrzeugs 10 wird die Zwischenkreisspannung Uzk durch die Klemmenspannung U2 der Hochleistungsbatterie 60 definiert. Bei gesperrtem DC/DC-Steller 70 würde automatisch die komplette benötigte Traktionsleistung des Antriebs 16 der Hochleistungsbatterie 60 entnommen oder im Falle von elektrodynamischen Bremsvorgängen in die Hochleistungsbatterie 60 zurückgespeist werden, und zwar mit der vollen Dynamik des Pulswechselrichters 15.

Die Hochleistungsbatterie 60 hat allerdings eine deutlich geringere Kapazität als die Hochenergiebatterie 50, weshalb es notwendig ist, die Hochleistungsbatterie 60 zu laden oder auch zu entladen. Dies wird mit einer sehr niedrigen Dynamik und kleinen Leistungen durch den DC/DC-Steller 70 übernommen, welcher die notwendige Ladeleistung für die Hochleistungsbatterie 60 der Hochenergiebatterie 50 entnimmt oder die notwendige Entladeleistung der Hochenergiebatterie 50 zuführt.

Kleine durchschnittliche Dauerleistungen mit niedriger Dynamik reichen aus, um die Hochleistungsbatterie 60 in einem optimalen Ladezustandsbereich oder auch SoC-Fenster zu halten. Im Mittel benötigt die Traktionsanlage bzw. der Antrieb 16 eine deutlich kleinere Leistung als es für kurze Leistungsspitzen, wie beispielsweise Beschleunigungsvorgänge, notwendig ist.

Um den Ladezustand der Hochleistungsbatterie 60 in einem optimalen Band zu halten, werden die Funktionsblöcke 110 und 120 eingesetzt. Bei den Funktionen f_max(SoC) und f_min(SoC) handelt es sich vorzugsweise jeweils um abschnittsweise definierte Funktionen:

$$f\_max(SoC) = \begin{cases} (SoC - SW1)^2 & \text{für } SW1 < SoC \leq 1 \\ 0 & \text{für } 0 \leq SoC \leq SW1 \end{cases}$$

$$f\_max(SoC) = \begin{cases} (SoC - SW2)^2 & \text{für } 0 < SoC \leq SW2 \\ 0 & \text{für } SW2 < SoC \leq 1 \end{cases}$$

Die Funktion f_max(SoC) hat die Aufgabe, die Hochleistungsbatterie 60 zu entladen, wenn der Ladezustand zu hoch wird. Hierzu steigt der Wert der Funktion f_max mit zunehmenden SoC-Wert nichtlinear an.

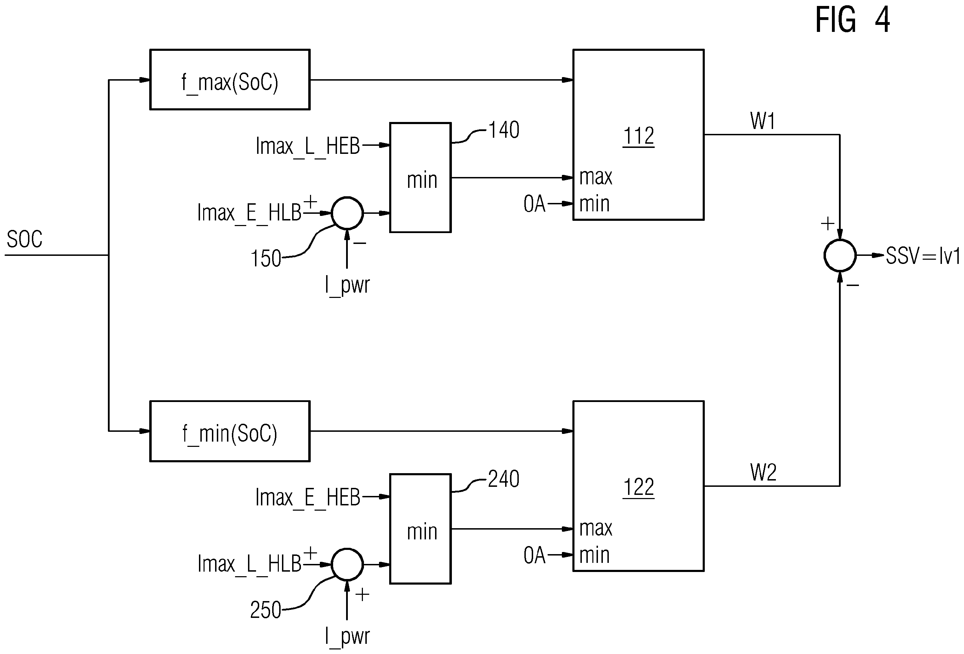

Der Ausgangswert dieser Funktion wird dem PI-Regler 112 zugeführt. Zu erwähnen ist in diesem Zusammenhang eine bevorzugte Begrenzung des PI-Reglers 120, wie sie beispielhaft die Figur 4 zeigt.

In der Figur 4 wird die maximale Sollstromvorgabe SSV=Iv1 für den DC/DC-Steller 70, während des Batteriebetriebs des Fahrzeugs 10, einerseits durch den maximalen Ladestrom Imax_L_HEB der Hochenergiebatterie 50 und andererseits durch die Differenz zwischen dem maximalen Entladestrom Imax_E_HLB der Hochleistungsbatterie 60 und dem Strom I_pwr des Pulswechselrichters 15 begrenzt. Hierzu werden vorzugsweise ein Minimalwertbildner 140 und ein Differenzbildner 150 eingesetzt.

Die Funktion f_min(SoC) hat die Aufgabe, die Hochleistungsbatterie 60 zu laden, wenn der Ladezustand zu klein wird. Hierzu steigt der Wert der Funktion mit kleiner werdendem SoC an. Der Ausgangswert dieser Funktion wird dem PI-Regler 122 zugeführt. Die sich so ergebende Batteriestromvorgabe Iv1 wird dem DC/DC-Steller 70, während des Batteriebetriebs des Fahrzeugs 10, als Sollstromvorgabe SSV=Iv1 zugeführt. Der negative Wert der Sollstromvorgabe wird vom DC/DC-Steller 70 als Entladestrom interpretiert und entlädt die Hochenergiebatterie 50. Die Energie wird der Hochleistungsbatterie 60 zugeführt, wodurch diese geladen wird.

Zu erwähnen ist hier eine vorteilhafte Begrenzung des PI-Reglers 112, wie die Figur 4 zeigt. Die maximale Reglerausgabe W2 des PI-Reglers 122 wird begrenzt einerseits durch den maximalen Entladestrom Imax_E_HEB der Hochenergiebatterie 50 und andererseits durch die Summe aus dem maximalen Ladestrom Imax_L_HLB der Hochleistungsbatterie 60 und dem Strom I_pwr des Pulswechselrichters 15. Zur Begrenzung werden beispielsweise ein Minimalwertbildner 240 und ein Summenbildner 250 eingesetzt. Der maximale Entladestrom der Hochenergiebatterie 50 erhöht sich nämlich, wenn der Pulswechselrichter 15 dem Gleichspannungszwischenkreis 14 Traktionsleistung entnimmt und verringert sich, wenn der Pulswechselrichter 15 dem Gleichspannungszwischenkreis 14 ED bzw. elektrodynamische Bremsleistung hinzufügt.

Im Netzbetrieb des Fahrzeugs 10 wird die Regelung für den Netzbetrieb durch alle drei Module 100, 200 und 300 gemeinsam wahrgenommen. Im Unterschied zum Batteriebetrieb sind also alle drei Module 100, 200 und 300 aktiv in Betrieb.

Der Vierquadrantensteller 13 kann - wie bereits erwähnt - nicht die Zwischenkreisspannung Uzk regeln. Die

Zwischenkreisspannung Uzk wird durch die Hochleistungsbatterie 60 bestimmt, welche niederohmig mit dem Gleichspannungszwischenkreis 14 verbunden ist. Der Vierquadrantensteller 13 kann aus diesem Grund lediglich den Strom I_4QS in den Gleichspannungszwischenkreis 14 regeln.

Das Wechselrichterbetriebsmodul 300 hat die Aufgabe, den Strom I_pwr des Pulswechselrichters 15 zu kompensieren. Beim Antreiben des Fahrzeugs 10 entnimmt der Pulswechselrichter 15 dem Gleichspannungszwischenkreis 14 Strom und beim Bremsen führt der Pulswechselrichter 15 dem Gleichspannungszwischenkreis 14 Strom zu. Diese Ströme werden beim Antreiben vom Vierquadrantensteller 13 dem Gleichspannungszwischenkreis 14 zugeführt und beim Bremsen in das Netz zurückgespeist.

Im Wechselrichterbetriebsmodul 300 wird der entsprechende Strom aus der aktuellen Pulswechselrichterleistung P_pwr berechnet und als Wechselrichtervorgabe Iv3 dem Differenzbildner 400 und damit einem nicht gezeigten Stromregler im Vierquadrantensteller 13 vorgegeben. Diese gesteuerte Stromvorgabe für den Vierquadrantensteller 13 ist nicht perfekt, weshalb der Stromfehler zwischen dem tatsächlichen Pulswechselrichterstrom I_pwr und dem Strom des Vierquadrantenstellers 13 automatisch in die Hochleistungsbatterie 60 fließt oder von dieser abgegeben wird. Dieser Effekt führt dazu, dass auch die Hochleistungsbatterie 60 im Netzbetrieb eine SoC-Regelung benötigt, die von dem Batteriebetriebsmodul 100 übernommen wird.

Das Stellerbetriebsmodul 200 hat die Aufgabe, die Hochenergiebatterie 50 auf einem vorgegebenen Ladezustand zu halten. Hierzu wird zunächst über den PI-Regler 220 eine Sollstromangabe I_DCDC_soll für den DC/DC-Steller 70 erzeugt.

Diese Sollstromangabe I_DCDC_soll bezieht sich jedoch auf die Klemmenspannung U1 der Hochenergiebatterie 50. Der zu der Sollstromangabe I_DCDC_soll korrespondierende Sollstrom muss vom Vierquadrantensteller 13 dem Gleichspannungszwischenkreis 14 aus dem Netz spannungskorrigiert zugeführt werden. Hierzu muss die batteriebezogene Sollstromangabe I_DCDC_soll auf die Zwischenkreisspannung Uzk umgerechnet werden. Die Umrechnung erfolgt durch Multiplikation mit dem Verhältnis U1/U2 zwischen der Klemmenspannung U1 der Hochenergiebatterie 50 und der Klemmenspannung U2 der Hochleistungsbatterie 60 im Quotientenbildner 230.

Da die Sollstromangabe I_DCDC_soll zur Ansteuerung des DC/DC-Stellers 70 während des Netzbetriebs dient, kann sie auch als eine weitere Sollstromvorgabe angesehen werden, die die Steuereinrichtung 80 zusätzlich zu der Sollstromvorgabe SSV für den Vierquadrantensteller 13 erzeugt.

Das Batteriebetriebsmodul 100 hat die Aufgabe, auch im Netzbetrieb die Hochleistungsbatterie 60 in einem optimalen SoC-Bereich zu halten. Dies ist notwendig, wenn beispielsweise die Leistungs- bzw. Stromvorsteuerung des Vierquadrantenstellers 13 zu ungenau ist und sich dadurch Entlade- oder Ladeströme in der Hochleistungsbatterie 60 ergeben, die den Ladezustand verändern.

Um den Ladezustand in einem optimalen Bereich zu halten, wird das bereits oben im Zusammenhang mit dem Batteriebetriebsmodul 100 beschriebene Verfahren eingesetzt.

Die Funktion f_max(SoC) steigt bei größer werdendem SoC an. Der Ausgangswert dieser Funktion wird über den PI-Regler 112 als negative Batteriestromvorgabe Iv1 dem Vierquadrantensteller 13 zugeführt. Diese negative Batteriestromvorgabe Iv1 bewirkt ein Entladen der Hochleistungsbatterie 60. Hier ist ein Unterschied zum Batteriebetrieb. Um im Batteriebetrieb die Hochleistungsbatterie 60 zu entladen, wird für den DC/DC-Steller 70 als Sollstromvorgabe SSV die Batteriestromvorgabe Iv1 vorgegeben, welche vom DC/DC-Steller 70 als Ladestrom für die Hochenergiebatterie 50 interpretiert wird. Dieser Ladestrom für die Hochenergiebatterie 50 wird dem Gleichspannungszwischenkreis 14 entnommen und führt damit zum Entladen der Hochleistungsbatterie 60. Der Vierquadrantensteller 13 hingegen braucht eine negative Batteriestromvorgabe Iv1, um in das Netz zurückzuspeisen und damit Energie dem Gleichspannungszwischenkreis 14 zu entnehmen.

Die Funktion f_min(SoC) wird bei kleiner werdendem SoC größer. Der Ausgangswert dieser Funktion wird über den PI-Regler 122 in eine positive Batteriestromvorgabe Iv1 umgewandelt. Diese positive Batteriestromvorgabe Iv1 erhöht den Sollstrom für den Vierquadrantensteller 13, welcher mehr Leistung dem Gleichspannungszwischenkreis 14 zuführt und damit die Hochleistungsbatterie 60 lädt.

Im Netzbetrieb werden die maximal zulässigen Reglerausgabewerte Wimax und W2may vorzugsweise anders als im Batteriebetrieb vorgegeben. Im Netzbetrieb gilt vorzugsweise:

$$W1max = Imax\_E\_HLB$$

und

$$W2max = Imax\_L\_HLB$$

wobei Imax_E_HLB den maximal erlaubten Entladestrom der Hochleistungsbatterie 60 und Imax_L_HLB den maximal erlaubten Entladestrom der Hochleistungsbatterie 60 bezeichnet.

Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden.

Auch können alle Merkmale von Unteransprüchen jeweils für sich mit jedem der nebengeordneten Ansprüche kombiniert werden, und zwar jeweils für sich allein oder in beliebiger Kombination mit einem oder mehreren anderen Unteransprüchen, um weitere andere Ausführungsbeispiele zu erhalten.

**Patentansprüche**

1. Verfahren zum Betreiben eines elektrischen Fahrzeugs (10), das einen netzseitigen Umrichter (13) zum Anschluss an ein streckenseitiges Energieversorgungsnetz (20), einen an den netzseitigen Umrichter (13) angeschlossenen Gleichspannungszwischenkreis (14), einen an den Gleichspannungszwischenkreis (14) angeschlossenen antriebsseitigen Umrichter (15) und eine mittels eines batterieseitigen Umrichters (70) mittelbar an den Gleichspannungszwischenkreis (14) angeschlossene erste Batterie (50) umfasst,
**dadurch gekennzeichnet, dass**

   - in Abhängigkeit vom Ladezustand (SoC) einer zweiten Batterie (60), die an den Gleichspannungszwischenkreis (14) umrichterfrei angeschlossen ist, eine Batteriestromvorgabe (Iv1) ermittelt und unter Heranziehung dieser Batteriestromvorgabe (Iv1) zumindest einer der genannten Umrichter (13, 70) angesteuert wird,
   - wobei der Betrag der Batteriestromvorgabe (Iv1) größer als Null gewählt wird, wenn der Ladezustand (SoC) einen oberen Schwellenwert (SW1) überschreitet oder einen unteren Schwellenwert (SW2) unterschreitet, und
   - wobei der Betrag der Batteriestromvorgabe (Iv1) überproportional umso größer gewählt wird, je mehr der Ladezustand (SoC) den oberen Schwellenwert (SW1) überschreitet oder den unteren Schwellenwert (SW2) unterschreitet.

2. Verfahren nach Anspruch 1,
dadurch gekennzeichnet, dass im Falle, dass der Ladezustand (SoC) den oberen Schwellenwert (SW1) überschreitet, die betragsmäßige Ermittlung der Batteriestromvorgabe (Iv1) das Anwenden einer ganzrationalen Funktion (f_max) n-ten Grades auf die Differenz zwischen dem Ladezustand (SoC) und dem oberen Schwellenwert (SW1) unter Bildung eines oberen Funktionswerts (Fmax) einschließt.

3. Verfahren nach Anspruch 2,
**dadurch gekennzeichnet, dass** im Falle, dass der Ladezustand (SoC) den oberen Schwellenwert (SW1) überschreitet, die betragsmäßige Ermittlung der Batteriestromvorgabe (Iv1) das Einspeisen des oberen Funktionswerts (Fmax) in einen oberen PI-Regler (112) einschließt und die Reglerausgabe (W1) des oberen PI-Reglers (112) den Betrag der Batteriestromvorgabe (Iv1) definiert.

4. Verfahren nach einem der voranstehenden Ansprüche,
**dadurch gekennzeichnet, dass** im Falle, dass der Ladezustand (SoC) den unteren Schwellenwert (SW2) unterschreitet, die betragsmäßige Ermittlung der Batteriestromvorgabe (Iv1) das Anwenden einer ganzrationalen Funktion (f_min) n-ten Grades auf die Differenz zwischen dem unteren Schwellenwert (SW2) und dem Ladezustand (SoC) unter Bildung eines unteren Funktionswerts (Fmin) einschließt.

5. Verfahren nach Anspruch 4,
**dadurch gekennzeichnet, dass** im Falle, dass der Ladezustand (SoC) den unteren Schwellenwert (SW2) unterschreitet, die betragsmäßige Ermittlung der Batteriestromvorgabe (Iv1) das Einspeisen des unteren Funktionswerts (Fmin) in einen unteren PI-Regler (122) einschließt und die Reglerausgabe (W2) des unteren PI-Reglers (122) den Betrag der Batteriestromvorgabe (Iv1) definiert.

6. Verfahren nach einem der voranstehenden Ansprüche,
**dadurch gekennzeichnet, dass** die ganzrationalen Funktionen (f_max, f_min) n-ten Grades quadratische Funktionen sind.

7. Verfahren nach einem der voranstehenden Ansprüche,
**dadurch gekennzeichnet, dass** im Falle eines Batteriebetriebs des Fahrzeugs (10) und eines inaktiven netzseitigen Umrichters (13) der batterieseitige Umrichter (70) derart angesteuert wird, dass die erste Batterie (50) einen Batteriestrom in den
Gleichspannungszwischenkreis (14) einspeist, der der Batteriestromvorgabe (Iv1) entspricht.

**8.** Verfahren nach einem der voranstehenden Ansprüche,
**dadurch gekennzeichnet, dass** im Falle eines Netzbetriebs des Fahrzeugs (10) der netzseitige Umrichter (13) derart angesteuert wird, dass er einen Zwischenkreisstrom (I_4QS) in den Gleichspannungszwischenkreis (14) einspeist, der einer mit der Batteriestromvorgabe (Iv1) gebildeten Sollstromvorgabe (SSV) entspricht.

**9.** Verfahren nach Anspruch 8,
**dadurch gekennzeichnet, dass** die Sollstromvorgabe (SSV) unter Heranziehung der Batteriestromvorgabe (Iv1) und zumindest einer ersten und zweiten weiteren Vorgabe (Iv2, Iv3) ermittelt wird,

- wobei die erste weitere Vorgabe (Iv2) auf die erste Batterie (50) bezogen ist und den Strom angibt, den der netzseitige Umrichter (13) der ersten Batterie (50) zur Aufrechterhaltung eines Sollladezustands zur Verfügung stellen soll, und
- wobei die zweite weitere Vorgabe (Iv3) auf den antriebsseitigen Umrichter (15) bezogen ist und den Strom angibt, den der netzseitige Umrichter (13) dem antriebsseitigen Umrichter (15) zum Betrieb des Antriebs (16) zur Verfügung stellen soll.

**10.** Verfahren nach Anspruch 9,
**dadurch gekennzeichnet, dass** die Sollstromvorgabe (SSV) durch vorzeichenrichtige Addition der Batteriestromvorgabe (Iv1) und der ersten und zweiten weiteren Vorgabe (Iv2, Iv3) ermittelt wird.

**11.** Elektrisches Fahrzeug (10), das einen netzseitigen Umrichter (13) zum Anschluss an ein streckenseitiges Energieversorgungsnetz (20), einen an den netzseitigen Umrichter (13) angeschlossenen Gleichspannungszwischenkreis (14), einen an den Gleichspannungszwischenkreis (14) angeschlossenen antriebsseitigen Umrichter (15) und eine mittels eines batterieseitigen Umrichters (70) mittelbar an den Gleichspannungszwischenkreis (14) angeschlossene erste Batterie (60) umfasst,
**dadurch gekennzeichnet, dass** an den Gleichspannungszwischenkreis (14) eine zweite Batterie (60) umrichterfrei angeschlossen ist und eine Steuereinrichtung (80) vorhanden ist, die

- in Abhängigkeit vom Ladezustand (SoC) der zweiten Batterie (60) eine Batteriestromvorgabe (Iv1) ermittelt und unter Heranziehung dieser Batteriestromvorgabe zumindest einen der genannten Umrichter (13, 70) ansteuert,
- wobei sie den Betrag der Batteriestromvorgabe (Iv1) größer als Null wählt, wenn der Ladezustand (SoC) einen oberen Schwellenwert (SW1) überschreitet oder einen unteren Schwellenwert (SW2) unterschreitet, und
- wobei sie den Betrag der Batteriestromvorgabe (Iv1) überproportional umso größer wählt, je mehr der Ladezustand (SoC) den oberen Schwellenwert (SW1) überschreitet oder den unteren Schwellenwert (SW2) unterschreitet.

**12.** Fahrzeug nach Anspruch 11,
**dadurch gekennzeichnet, dass**

- die Steuereinrichtung (80) einen oberen Funktionsblock (110) umfasst, der im Falle, dass der Ladezustand (SoC) den oberen Schwellenwert (SW1) überschreitet, auf die Differenz zwischen dem Ladezustand (SoC) und dem oberen Schwellenwert (SW1) eine ganzrationale Funktion (f_max) n-ten Grades unter Bildung eines oberen Funktionswerts (Fmax) anwendet, und
- die Steuereinrichtung (80) einen dem oberen Funktionsblock (110) nachgeordneten oberen PI-Regler (112) umfasst, in den der obere Funktionswert (Fmax) eingespeist wird und dessen Reglerausgabe (W1) den Betrag der Batteriestromvorgabe (Iv1) definiert, wenn der Ladezustand (SoC) den oberen Schwellenwert (SW1) überschreitet.

**13.** Fahrzeug nach einem der voranstehenden Ansprüche 11 bis 12,
**dadurch gekennzeichnet, dass**

- die Steuereinrichtung (80) einen unteren Funktionsblock (120) umfasst, der im Falle, dass der Ladezustand (SoC) den unteren Schwellenwert (SW2) unterschreitet, auf die Differenz zwischen dem unteren Schwellenwert (SW2) und dem Ladezustand (SoC) eine ganzrationale Funktion (f_min) n-ten Grades unter Bildung eines unteren Funktionswerts (Fmin) anwendet, und
- die Steuereinrichtung (80) einen dem unteren Funktionsblock (120) nachgeordneten unteren PI-Regler (122) umfasst, in den der untere Funktionswert (Fmin) eingespeist wird und dessen Reglerausgabe (W2) den Betrag der Batteriestromvorgabe (Iv1) definiert, wenn der Ladezustand (SoC) den unteren Schwellenwert (SW2) unterschreitet.

**14.** Fahrzeug nach einem der voranstehenden Ansprüche 11 bis 13,
**dadurch gekennzeichnet, dass** die ganzrationalen Funktionen (f_max, f_min) n-ten Grades quadratische Funktionen sind.

FIG 1

EP 4 371 801 A1

FIG 2

# FIG 3

FIG 4

EP 4 371 801 A1

Europäisches
Patentamt

European
Patent Office

Office européen
des brevets

# EUROPÄISCHER RECHERCHENBERICHT

**Nummer der Anmeldung**

**EP 23 20 9481**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | CN 113 263 920 A (UNIV SOUTHWEST JIAOTONG) 17. August 2021 (2021-08-17) * Absätze [0005], [0029] – [0032], [0056]; Abbildungen 1-3 * ----- | 1-14 | INV. B60L9/24 B60L58/20 B60L58/22 B61C3/02 |
| A | US 9 083 194 B2 (KOGA TAKERU [JP]; NOGI MASAYUKI [JP] ET AL.) 14. Juli 2015 (2015-07-14) * Abbildungen 1-6 * ----- | 1-14 | B61C9/38 H02J1/10 H02M5/42 |

**RECHERCHIERTE SACHGEBIETE (IPC)**

B60L
H01J
H02M
B61K
B61C
H02J

Der vorliegende Recherchenbericht wurde für alle Patentansprüche erstellt

| Recherchenort | Abschlußdatum der Recherche | Prüfer |
|---|---|---|
| Den Haag | 8. April 2024 | Schury, Dominik |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................................

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 20 9481

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-04-2024

| Im Recherchenbericht angeführtes Patentdokument | Datum der Veröffentlichung | Mitglied(er) der Patentfamilie | Datum der Veröffentlichung |
|---|---|---|---|
| CN 113263920 A | 17-08-2021 | KEINE | |
| US 9083194 B2 | 14-07-2015 | CN 102969750 A | 13-03-2013 |
| | | EP 2566008 A2 | 06-03-2013 |
| | | JP 5840425 B2 | 06-01-2016 |
| | | JP 2013051844 A | 14-03-2013 |
| | | US 2013049458 A1 | 28-02-2013 |

EPO FORM P0461

Für nähere Einzelheiten zu diesem Anhang : siehe Amtsblatt des Europäischen Patentamts, Nr.12/82